# EUROPÄISCHE PATENTSCHRIFT

(11) **EP 3 382 695 B1**
(45) Veröffentlichungstag und Bekanntmachung des Hinweises auf die Patenterteilung: **13.05.2020**
(21) Anmeldenummer: 18172594.6
(22) Anmeldetag: 22.09.2015
(51) Int. Cl.: G10L 13/027, A47J 43/046, A47J 43/07, A47J 27/00, A47J 43/04, G06F 3/16

(54) **VERFAHREN ZUR ERZEUGUNG EINER AKUSTISCHEN SPRACHAUSGABE**
METHOD FOR PRODUCING ACOUSTIC VOCAL OUTPUT
PROCÉDÉ DE GÉNÉRATION D'UNE SORTIE VOCALE ACOUSTIQUE

(43) Veröffentlichungstag der Anmeldung: 03.10.2018
(62) Teilanmeldung aus: 15771898.2
(73) Patentinhaber: Vorwerk & Co. Interholding GmbH, 42270 Wuppertal (DE)
(72) Erfinder: Yan, Wenjie, 40476 Düsseldorf (DE)
(74) Vertreter: Patentanwälte Bals & Vogel

(56) Entgegenhaltungen:
- DE-A1-102008 034 144
- US-A1- 2008 086 303
- US-A1- 2009 171 665
- US-A1- 2009 254 345
- US-A1- 2010 042 411
- US-A1- 2014 108 010
- US-B1- 6 950 792

## Beschreibung

Die vorliegende Erfindung betrifft ein Verfahren zur Erzeugung einer akustischen Sprachausgabe, insbesondere bei einem Haushaltsgerät, vorzugsweise bei einer elektromotorisch betriebenen Küchenmaschine mit einem Rührgefäß und einem Rührwerk in dem Rührgefäß. Ferner bezieht sich die Erfindung auf eine Küchenmaschine sowie auf ein Computerprogrammprodukt.

Die Erzeugung einer akustischen Sprachausgabe, insbesondere bei einem Haushaltsgerät, ist aus dem Stand der Technik bekannt. Akustische Sprachausgabe für Kochrezepte ist zum Beispiel in US 2014/0108010 A1 oder US 2010/0042411 A1 offenbart. Darüber hinaus zeigen US 2009/0254345 A1 und US 2008/0086303 A1 weitere Beispiele für die Sprachausgabe von Texten. Im Allgemeinen kommen für die Sprachsynthese sogenannte Text-to-Speech (TTS)-Systeme zum Einsatz, um beliebige Fließtexte in eine akustische Sprachausgabe umzuwandeln. Die Sprachsynthese, insbesondere von beliebigen Texten, ermöglicht dabei eine vereinfachte Bedienung und bietet eine enorme Flexibilität und Steigerung des Bedienkomforts.

Allerdings ist die Sprachsynthese, also die künstliche Erzeugung von menschlicher Sprache, technisch komplex und aufwendig. Moderne Text-to-Speech- oder Sprachsyntheseverfahren nutzen ferner umfangreiche Audiodaten, welche aufwendig verarbeitet werden. Dies setzt einen entsprechend dimensionierten Datenspeicher und eine leistungsfähige Hardware bzw. IT-Infrastruktur voraus. Gerade im Hinblick auf den Einsatz in Haushaltsgeräten, wie Küchengeräten oder Küchenmaschinen, ist ein solcher technischer Aufwand oft nicht möglich oder sinnvoll. Die in den Haushaltsgeräten eingesetzten Verarbeitungssysteme (zum Beispiel eingebettete Systeme, Mikroprozessoren, Speicher, und dergleichen) weisen dabei meist nicht die erforderliche Leistungsfähigkeit auf, um mittels bekannter Sprachsyntheseverfahren eine qualitativ hochwertige und flexible Sprachausgabe zu erzeugen. Daher erfordert der Einsatz von Sprachsyntheseverfahren oft noch einen hohen Herstellungs- und Kostenaufwand. Aufgrund der eingeschränkten Möglichkeiten für die Sprachausgabe ist ferner die Bedienung der Haushaltsgeräte, insbesondere auch für sehbehinderte Benutzer, oft noch erschwert und der Komfort verringert.

Es ist daher eine Aufgabe der vorliegenden Erfindung, die voranstehend beschriebenen Nachteile zumindest teilweise zu beheben. Insbesondere ist es Aufgabe der vorliegenden Erfindung, ein verbessertes Verfahren zur akustischen Sprachausgabe bereitzustellen, welches auch mit einer eingeschränkt leistungsfähigen Hardwarebasis betrieben werden kann. Es soll weiter insbesondere die Bedienung einer Vorrichtung, insbesondere eines Haushaltsgeräts und/oder einer Küchenmaschine, verbessert und/oder vereinfacht werden. Weiter sollen insbesondere die Kosten und der Aufwand für die Herstellung der Vorrichtung und/oder für die Bereitstellung einer akustischen Sprachausgabe reduziert werden.

Die voranstehende Aufgabe wird gelöst durch ein Verfahren mit den Merkmalen des Anspruchs 1, eine Küchenmaschine mit den Merkmalen des Anspruchs 13 sowie durch ein Computerprogrammprodukt mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Küchenmaschine sowie dem erfindungsgemäßen Computerprogrammprodukt, und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch ein Verfahren zur Erzeugung einer akustischen Sprachausgabe nach Anspruch 1.

Hierbei ist insbesondere vorgesehen, dass zumindest ein oder mehrere Sprachsegmente in zumindest einem, insbesondere persistenten, Informationsobjekt vorgespeichert sind, und jeweils anhand zumindest einer Positionsinformation im Informationsobjekt identifiziert und/oder abgerufen werden. Die Positionsinformation ist dabei vorzugsweise eine dem Informationsobjekt zugeordnete Information, welche eine (eindeutige) Identifizierung und/oder ein Abrufen und/oder ein Lokalisieren von Informationen und/oder Daten des Informationsobjekts ermöglicht. Die Identifizierung (zum Beispiel mittels einer Suche) und/oder das Abrufen (Auslesen der Daten) erfolgt beispielsweise über ein Dateisystem und/oder eine Datenbank. Das Abrufen gemäß Schritt b) kann zum Beispiel das Extrahieren der Sprachsegmente, insbesondere von (Audio-) Daten, aus dem Informationsobjekt anhand der Positionsinformation umfassen. Das Ausgeben gemäß Schritt c) umfasst beispielsweise die Verarbeitung der Sprachsegmente, insbesondere Audiodaten und/oder Ermittlung eines Audiosignals anhand der Sprachsegmente und/oder Übertragung des Audiosignals an einen Lautsprecher. Das Informationsobjekt umfasst vorzugsweise die mehreren vorgespeicherten Sprachsegmente, bevorzugt Daten, besonders bevorzugt (zumindest teilweise) Audiodaten. Die Sprachsegmente korrespondieren dabei zum Beispiel mit den Vorlagensegmenten, um die durch die Vorlagensegmente bereitgestellten Informationen (zum Beispiel Texte und/oder Rezeptschritte bzw. -anweisungen) sprachlich wiederzugeben. Die Sprachsegmente umfassen insbesondere eine akustische Wiedergabe von jeweils einem Textbaustein oder Vorlagensegment. Es wird durch das erfindungsgemäße Verfahren insbesondere der Vorteil erzielt, dass schnell und ressourcensparend (auch speicherplatzsparend) eine Sprachausgabe erzeugt werden kann. Insbesondere gewährleistet die Vor-Speicherung der Mehrzahl von Sprachsegmenten in dem einen (insbesondere einzigen) Informationsobjekt, das die Verfügbarkeit und Abrufgeschwindigkeit der relevanten Informationen, das heißt der für die Sprachausgabe relevanten Sprachsegmente, erhöht wird. Es kann weiter der Verwaltungsaufwand, anders als bei verteilt vorliegenden Daten, verringert werden. Weiter wird insbesondere die Sicherheit und Zuverlässigkeit durch die zentrale Speicherung in dem Informationsobjekt erhöht. Insbesondere wird durch das erfindungsgemäße Verfahren eine Sprachausgabe bei Haushaltsgeräten, wie der Küchenmaschine, ermöglicht. Das erfindungsgemäße Verfahren hat damit ebenfalls den Vorteil, dass die Bedienung und Nutzung des Haushaltsgerätes erleichtert und verbessert werden kann.

Das Informationsobjekt dient hierbei vorzugsweise zur persistenten, das heißt insbesondere dauerhaften und damit nicht-flüchtigen, Informations- und/oder Datenspeicherung. Insbesondere bleiben die Informationen des Informationsobjekts, insbesondere die vorgespeicherten Sprachsegmente, auch nach dem Ausbleiben einer Energieversorgung eines Speichers für das Informationsobjekt erhalten. Das persistente Informationsobjekt ist somit beispielsweise als (einzelne) Datei eines Dateisystems und/oder Datenblock und/oder Datenobjekt in einer Datenbank ausgestaltet. Das Informationsobjekt ist bevorzugt in einem nicht-flüchtigen, besonders bevorzugt semi-permanenten oder permanenten, Speicher, wie zum Beispiel einer Datenspeichereinheit eines Haushaltsgeräts, gespeichert. Der Speicher ist beispielsweise als eine Festplatte und/oder ein Wechseldatenträger und/oder ein SSD-Speicher und/oder ein Halbleiterspeicher, z. B. EPROM, EEPROM oder Flash-Speicher, ausgebildet. Die Nutzung eines semi-permanenten Speichers ermöglicht dabei, dass im Gegensatz zum permanenten Speicher die Informationen des Informationsobjekts veränderbar sind. Weiter ist es denkbar, dass das Informationsobjekt zur Verbesserung der Zugriffszeiten zusätzlich (zumindest teilweise) in einem flüchtigen Zwischenspeicher (Cache) gespeichert / gepuffert wird. Hierzu kann der Speicher zum Beispiel einen solchen Cache aufweisen. Das Informationsobjekt ist vorzugsweise eine Datei, welche durch ein Dateisystem verwaltet wird. Die Vor-Speicherung der Sprachsegmente gemeinsam in der einzelnen Datei verringert dabei den Verwaltungsaufwand durch das Dateisystem, erhöht damit die Zugriffsgeschwindigkeit und verbessert die Sicherheit und Zuverlässigkeit für die Sprachausgabe.

Optional kann es vorgesehen sein, dass das Informationsobjekt durch ein Dateisystem verwaltet wird, und insbesondere das Identifizieren (das heißt insbesondere auch Lokalisieren) gemäß Schritt a) und/oder das Abrufen gemäß Schritt b) der jeweiligen Sprachsegmente direkt über das Dateisystem anhand der Positionsinformation erfolgt. Die Positionsinformation umfasst dabei zum Beispiel mindestens einen Zeitstempel bzw. mindestens eine Zeitinformation für eine Audiodatei als Informationsobjekt. Der Zeitstempel umfasst beispielsweise ein Zeitfenster, das heißt einen Startzeitpunkt und einen Endzeitpunkt (zum Beispiel in der Audiodatei), so dass durch dieses Intervall das Sprachsegment definiert ist. Weiter umfasst die Positionsinformation zum Beispiel eine oder mehrere Dateisysteminformationen zur Lokalisierung, wie zum Beispiel eine Dateiadresse und/oder eine physikalische Adresse. Auch kann die Positionsinformation vorteilhafterweise eine Indizierung von Daten oder Bytes des Informationsobjekts, das heißt der Datei oder Audiodatei, umfassen. Das Dateisystem kann vorzugsweise als ein für einen Speicher des Informationsobjekts spezifisches Dateisystem ausgebildet sein. Es kann weiter vorgesehen sein, dass das Dateisystem als ein hierarchisches Dateisystem und/oder als ein Netzwerkdateisystem und/oder als ein Dateisystem der FAT (file allocation table)-Familie ausgeführt ist. Für das Identifizieren gemäß Schritt a) kann es vorgesehen sein, dass das Dateisystem Datenbankeinträge und/oder Daten verwaltet, welche eine Zuordnung von zumindest einem Vorlagensegment der Sprachvorlage zu einer zugeordneten Positionsinformation erlauben. Für das Abrufen gemäß Schritt b) kann es vorgesehen sein, dass ein Auslesen von Daten, insbesondere von Datenblöcken, in Abhängigkeit von der Positionsinformation durch das Dateisystem erfolgt. Die Positionsinformation umfasst hierbei zum Beispiel zumindest einen Speicherort im Dateisystem oder Speicher für das identifizierte Sprachsegment. Dabei ist es auch denkbar, dass das Sprachsegment jeweils verteilt gespeichert ist, und insbesondere durch mehrere Positionsinformationen identifiziert und/oder abgerufen werden kann. Die Nutzung eines Dateisystems hat dabei den Vorteil, dass ein schnelles und einfaches Auslesen der Sprachsegmente möglich ist. Weiter kann unter Umständen auf ein bereits im Haushaltsgerät vorhandenes Dateisystem zurückgegriffen werden, um somit Kosten und Ressourcen zu sparen.

Es kann im Rahmen der Erfindung vorgesehen sein, dass das zumindest eine Informationsobjekt jeweils als einzelne Datei, insbesondere als Audiodatei, ausgestaltet ist, wobei vorzugsweise die Positionsinformation eine Indizierungsinformation und/oder eine Zeitinformation, insbesondere zumindest ein Zeitstempel, für die Sprachsegmente, insbesondere die Audiodaten, der Datei ist. Unter "Datei" wird insbesondere ein durch ein Dateisystem verwalteter Datenbestand verstanden, welcher vorzugsweise durch einen Dateinamen identifiziert wird. Die Datei umfasst dabei bevorzugt digitale Informationen, insbesondere als Bit- und/oder Bytefolgen und kann beispielsweise auch weitere Attribute, wie den Dateityp und/oder die Dateigröße und/oder Schreib- und Leserechte und/oder einen Erstellungs- und/oder Änderungszeitpunkt, aufweisen. Die Datei kann ferner gegebenenfalls komprimiert und/oder verschlüsselt auf dem Speicher vorliegen. Die Datei liegt weiter vorzugsweise als Audiodatei, insbesondere als OGG-Datei (das heißt im OGG-Dateiformat bzw. gemäß einer OGG-Spezifikation), und/oder MP3-Datei und/oder MP4-Datei vor. Die Daten der Datei sind beispielsweise Audiodaten, welche insbesondere PCM (Puls-Code-Modulation)-Rohdaten und/oder komprimierte Audiodaten umfassen. Weiter kann die Datei vorzugsweise auch Metadaten umfassen, welche beispielsweise Informationen über die Abtastrate der Sprachsegmente und/oder über die Positionsinformationen aufweisen. Es kann dabei vorgesehen sein, dass die Positionsinformationen in Abhängigkeit von den Metadaten der jeweiligen Datei berechnet und/oder ermittelt werden. Weiter kann es möglich sein, dass sämtliche Sprachsegmente in einer einzigen Datei gespeichert sind. Hierdurch wird der Verwaltungsaufwand stark reduziert.

Auch ist es optional denkbar, dass zur Identifizierung gemäß Schritt a) zumindest ein Vorlagensegment der Sprachvorlage abgerufen wird, und insbesondere ein Zuordnen des Vorlagensegments zu der Positionsinformation erfolgt, um das zumindest eine Sprachsegment zu identifizieren. Das Vorlagensegment ist beispielsweise eine Textinformation, wobei der enthaltene Text vorzugsweise durch das entsprechende (identifizierte) Sprachsegment sprachlich wiedergegeben wird. Weiter kann alternativ oder zusätzlich das Vorlagensegment auch ein Identifikationsmerkmal, zum Beispiel einen Code und/oder eine eindeutige Zeichenfolge, umfassen. Hierzu ist gegebenenfalls eine vorherige Definition notwendig, welches Identifikationsmerkmal in eindeutiger Weise einem entsprechenden Sprachsegment zugeordnet werden kann. Die Identifizierung erfolgt dabei zum Beispiel durch ein Abrufen des Vorlagensegments und/oder ein (anschließendes) Suchen der zugehörigen Positionsinformation und/oder Vergleichen des Vorlagensegments mit den (oder sämtlichen vorhandenen) Positionsinformationen, zum Beispiel durch das Dateisystem und/oder durch eine Datenbank. Hierzu kann die Datenbank beispielsweise eine Tabelle aufweisen, welche (bekannte) Vorlagensegmente den (lokal vorhandenen) Positionsinformationen und/oder Sprachsegmenten zuordnet. Hierdurch wird gewährleistet, dass zuverlässig in Abhängigkeit von der Sprachvorlage die Sprachausgabe erfolgen kann.

Vorteilhafterweise kann im Rahmen der Erfindung vorgesehen sein, dass zur Identifizierung gemäß Schritt a) eine lokale Identifizierung durch ein Zuordnen des Vorlagensegments zu der Positionsinformation eines lokalen Informationsobjekts erfolgt, um eine lokale Positionsinformation zu ermitteln, wobei insbesondere das lokale Informationsobjekt in einer nicht-flüchtigen Datenspeichereinheit der erfindungsgemäßen Vorrichtung, insbesondere des Haushaltsgeräts gespeichert ist. Hierbei kann es vorgesehen sein, dass das lokale Informationsobjekt zum Beispiel räumlich lokal in zumindest einem Speicher an oder in der erfindungsgemäßen Vorrichtung und/oder an oder in dem Haushaltsgerät gespeichert ist und entsprechend lokale Sprachsegmente umfasst. Da gegebenenfalls nur ein begrenzter Speicherplatz lokal vorhanden ist, ist es denkbar, dass bei der Identifizierung gemäß Schritt a) das Vorlagensegment keinem der lokal verfügbaren Sprachsegmente zugeordnet werden kann, da das Sprachsegment lokal nicht verfügbar ist. Die lokale Identifizierung ist in diesem Fall erfolglos. Insbesondere wird dann, vorzugsweise nur dann, gemäß Schritt a) neben der lokalen Identifizierung noch eine weitere entfernte Identifizierung durchgeführt. Somit ist es möglich, für die erfindungsgemäße Vorrichtung, insbesondere das Haushaltsgerät, einen Speicher (wie die nicht flüchtige Datenspeichereinheit) mit nur geringer Speicherkapazität zu verwenden. Somit können die Kosten und der Aufwand für die Herstellung der Vorrichtung reduziert werden.

Ferner ist es denkbar, dass gemäß Schritt a) eine entfernte Identifizierung und/oder Generierung des Sprachsegmentes anhand des Vorlagensegments erfolgt, insbesondere nur dann, wenn eine lokale Identifizierung erfolglos war, wobei vorzugsweise gemäß Schritt b) das entfernt identifizierte oder entfernt generierte Sprachsegment vernetzt, das heißt insbesondere cloudbasiert, abgerufen wird. Die entfernte Identifizierung und/oder die entfernte Generierung erfolgt dabei beispielsweise an zumindest einer entfernten Recheneinheit. Der Begriff "entfernt" bezieht sich in diesem Zusammenhang insbesondere darauf, dass eine vernetzte Datenübertragung zum Beispiel über ein Netzwerk notwendig ist und/oder dass die Identifizierung und/oder Generierung nicht lokal (zum Beispiel durch die erfindungsgemäße Vorrichtung), sondern räumlich getrennt, insbesondere durch die entfernte Recheneinheit, zum Beispiel einen Server, erfolgt. Der hierzu notwendige Datenaustausch (das heißt zum Beispiel Übermittlung des Vorlagensegments) erfolgt dabei bevorzugt vernetzt durch ein Netzwerk, insbesondere über ein Internet und/oder über ein LAN (local area network) und/oder über ein Mobilfunknetz. Dabei kann es vorgesehen sein, dass die entfernte Recheneinheit ihre Dienste, das heißt insbesondere das entfernte Identifizieren oder Generieren des Sprachsegmentes, für eine Vielzahl verschiedener Geräte, insbesondere erfindungsgemäßer Vorrichtungen, über das Netzwerk zur Verfügung stellt. Somit kann flexibel und ressourcensparend eine Identifizierung oder Generierung von Sprachsegmenten stattfinden, insbesondere wenn diese lokal (noch) nicht vorhanden sind.

Außerdem kann es im Rahmen der Erfindung von Vorteil sein, dass gemäß Schritt a) eine entfernte Identifizierung durch ein Zuordnen des Vorlagensegments zu der Positionsinformation eines entfernten Informationsobjekts erfolgt, um eine entfernte Positionsinformation zu ermitteln, bevorzugt nur dann, wenn eine lokale Identifizierung erfolglos war. Die lokale Identifizierung ist insbesondere dann erfolglos, wenn das Sprachsegment und/oder die Positionsinformation, welche dem Vorlagensegment zugeordnet ist, lokal nicht verfügbar ist. Das entfernte Informationsobjekt ist dabei beispielsweise in einem entfernten Speicher der entfernten Recheneinheit gespeichert, und wird vorzugsweise durch ein entferntes Dateisystem der entfernten Recheneinheit verwaltet. Dies ermöglicht eine besonders einfache und schnelle entfernte Identifizierung und/oder ein entferntes Abrufen des identifizierten Sprachsegments durch die entfernte Recheneinheit.

Vorteilhaft ist es zudem, wenn gemäß Schritt a) und/oder b) ein Sprachsegment des entfernten Informationsobjekts anhand der entfernten Positionsinformation identifiziert und/oder abgerufen wird, und insbesondere vernetzt an die erfindungsgemäße Vorrichtung, insbesondere das Haushaltsgerät, übertragen wird. Für die vernetzte Übertragung weist die erfindungsgemäße Vorrichtung und/oder das Haushaltsgerät insbesondere eine Schnittstelle, bevorzugt Übertragungsschnittstelle, für ein Netzwerk auf. Bevorzugt ist vorgesehen, dass das entfernt identifizierte und/oder abgerufene Sprachsegment nach der Übertragung an die erfindungsgemäße Vorrichtung lokal in einem Speicher der erfindungsgemäßen Vorrichtung abgespeichert wird, insbesondere im lokalen Informationsobjekt. Damit kann flexibel der Bestand an lokalen Sprachsegmenten erweitert werden.

Gemäß einer vorteilhaften Weiterbildung der Erfindung kann vorgesehen sein, dass die Identifizierung und/oder Zuordnung anhand von lokalen Datenbankeinträgen einer lokalen Datenbank und/oder anhand von entfernten Datenbankeinträgen einer entfernten Datenbank erfolgt, wobei insbesondere die Datenbankeinträge eine erste Information zu einem Vorlagensegment mit einer zweiten Information zu einer Positionsinformation miteinander verknüpfen. Dabei ist es denkbar, dass durch die erfindungsgemäße Vorrichtung die lokale Datenbank und/oder von der entfernten Recheneinheit die entfernte Datenbank ausgewertet und/oder verarbeitet und/oder gespeichert wird. Die erste Information ist dabei beispielsweise gemeinsam mit der zweiten Information in einer Tabelle der Datenbank gespeichert. Somit kann in einfacher Weise das Vorlagensegment mit der Positionsinformation verknüpft werden. Es kann weiter vorgesehen sein, dass zur einfachen Verwaltung dieser Informationen die Datenbankeinträge der lokalen Datenbank durch die entfernte Recheneinheit (vernetzt) verändert werden können.

Ein weiterer Vorteil kann im Rahmen der Erfindung erzielt werden, wenn gemäß Schritt b) nach einer erfolgreichen lokalen Identifizierung zumindest ein lokal identifiziertes Sprachsegment abgerufen wird, und nach einer erfolglosen lokalen Identifizierung und/oder einer erfolgreichen entfernten Identifizierung zumindest ein entfernt identifiziertes Sprachsegment abgerufen wird, und/oder nach einer erfolglosen entfernten Identifizierung zumindest ein entfernt generiertes Sprachsegment abgerufen wird, wobei insbesondere das entfernt identifizierte oder entfernt generierte Sprachsegment in das lokale Informationsobjekt integriert wird. Es ist weiter denkbar, dass das entfernt generierte Sprachsegment in das entfernte Informationsobjekt integriert wird. Zur Integration kann vorzugsweise als ein erster Schritt gehören, dass die Daten des entsprechenden Sprachsegments in dem Informationsobjekt, zum Beispiel der Datei, gespeichert werden. Hierzu werden die Daten beispielsweise an eine bestimmte Position, vorzugweise an das Ende, des Informationsobjekts geschrieben. Als ein zweiter Schritt kann vorgesehen sein, dass entsprechend dieser Abspeicherung der Daten neue Positionsinformationen generiert werden, welche zum Beispiel anschließend neu in der Datenbank, insbesondere als Datenbankeintrag, abgespeichert werden. Weiter kann als dritter Schritt vorgesehen sein, dass nicht mehr benötigte Daten im Informationsobjekt gelöscht werden, um zusätzlichen Speicherplatz freizugeben. Hierdurch kann der benötigte Speicherplatz optimiert werden.

Es ist ferner denkbar, dass bei der Integration vorzugsweise zumindest eine neue Positionsinformation generiert und/oder in einer lokalen Datenbank abgespeichert wird, anhand derer das integrierte Sprachsegment eindeutig im lokalen Informationsobjekt identifiziert und/oder abgerufen werden kann. Hierdurch wird gewährleistet, dass bei einer erneuten Identifizierung des generierten Sprachsegments dieses von nun an lokal abgerufen und/oder identifiziert werden kann und nicht erneut generiert werden muss.

Es kann optional möglich sein, dass nach Schritt a) oder b) die lokalen und/oder entfernten Positionsinformationen kombiniert werden und/oder in einer lokalen Datenbank abgespeichert werden, und bevorzugt mit dem lokalen Informationsobjekt in einer Datenspeichereinheit der erfindungsgemäßen Vorrichtung, insbesondere des Haushaltsgeräts, abgespeichert werden. Es ist dabei auch denkbar, dass gleichzeitig mehrere Sprachsegmente entfernt identifiziert und/oder abgerufen werden, und insbesondere anschließend diese sämtlichen Sprachsegmente gemeinsam an die lokale erfindungsgemäße Vorrichtung übertragen werden. Um nun unterschiedliche übertragene Sprachsegmente voneinander unterscheiden zu können, werden ebenfalls die zugehörigen (zugeordneten) Positionsinformationen übertragen. Diese können gegebenenfalls anschließend modifiziert und lokal abgespeichert werden. Damit können besonders effizient die erforderlichen Informationen zur Sprachausgabe generiert und verfügbar gemacht werden.

Des Weiteren ist es im Rahmen der Erfindung optional möglich, dass gemäß Schritt c) zur akustischen Ausgabe das zumindest eine Sprachsegment über eine Ausgabevorrichtung, insbesondere mit einen Lautsprecher, in Schallwellen umgewandelt wird. Hierzu umfasst die Ausgabevorrichtung und/oder die erfindungsgemäße Vorrichtung vorzugsweise zumindest eine Verarbeitungsvorrichtung. Die Verarbeitungsvorrichtung kann beispielsweise mindestens einen Prozessor, insbesondere mindestens einen digitalen Signalprozessor und/oder mindestens einen Mikroprozessor und/oder mindestens einen Mikrocontroller, und/oder Speicher und/oder weitere Elektronikkomponenten umfassen. Weiter kann die Verarbeitungsvorrichtung vorzugsweise als ein eingebettetes System der erfindungsgemäßen Vorrichtung ausgestaltet sein. Die Verarbeitungsvorrichtung ist vorzugweise direkt oder indirekt elektrisch mit zumindest einem Lautsprecher und/oder mit zumindest einem Digital-Analog-Wandler und/oder mit zumindest einem Verstärker verbunden. Des Weiteren kann die Verarbeitungsvorrichtung geeignet sein, das erfindungsgemäße Verfahren und/oder das erfindungsgemäße Computerprogrammprodukt zumindest teilweise auszuführen. Insbesondere ist die Verarbeitungsvorrichtung und/oder die Ausgabevorrichtung geeignet, die Sprachsegmente und/oder die Audiodateien in akustische Schallwellen umzuwandeln, um eine Sprachausgabe der in den Sprachsegmenten enthaltenen Informationen zu bewirken. Hierdurch kann beispielsweise die Bedienung der erfindungsgemäßen Vorrichtung vereinfacht und verbessert werden. Die zumindest eine Verarbeitungsvorrichtung kann dabei vorzugsweise mit der weiteren Elektronik der erfindungsgemäßen Vorrichtung zumindest teilweise elektrisch verbunden und/oder zumindest teilweise darin integriert und/oder zumindest teilweise an einer gemeinsamen Platine angeordnet sein.

Weiter ist im Rahmen der Erfindung denkbar, dass die Sprachsegmente jeweils Audiodaten umfassen, welche vorzugsweise dazu ausgeführt sind, über eine Ausgabevorrichtung ausgegeben zu werden. Beispielsweise kann es auch vorgesehen sein, dass die Audiodaten und/oder die Informationsobjekte, beziehungsweise das Informationsobjekt, Metadaten umfassen, welche Informationen über die Ausgabevorrichtung enthalten. Damit ist zum Beispiel auch eine flexible Anpassung an verschiedene Ausgabevorrichtungen möglich.

Es kann ferner möglich sein, dass das Sprachsegment, insbesondere das entfernt generierte Sprachsegment, durch ein Text-to-Speech-System generierte oder von natürlicher Sprache aufgezeichnete Audiodaten umfasst. Hierzu weist die entfernte Recheneinheit zum Beispiel ein Text-to-Speech-System auf, um die generierten Sprachsegmente bei Bedarf aus den Vorlagensegmenten zu generieren. Hierdurch wird der Vorteil erzielt, dass das Text-to-Speech-System lediglich durch die entfernte Recheneinheit ausgeführt werden muss. Hierdurch kann eine besonders kostengünstige und/oder energiesparsame Verarbeitungsvorrichtung für die erfindungsgemäße Vorrichtung vorgesehen werden.

Vorteilhafterweise kann bei der Erfindung vorgesehen sein, dass die einzelnen Sprachsegmente und/oder die jeweiligen Audiodaten zumindest Sätze und/oder Wörter und/oder Phoneme und/oder Diphone und/oder Silben und/oder Morpheme und/oder Phrasen umfassen. Weiter ist es denkbar, dass die erfindungsgemäße Vorrichtung zumindest eine Verarbeitungsvorrichtung aufweist, welche geeignet ist, die Sprachsegmente und/oder Audiodaten neu zu verknüpfen, und hierdurch eine natürliche Sprachausgabe zu bewirken. Die Sprachsegmente und/oder die jeweiligen Audiodaten können dabei zum Beispiel zumindest teilweise aus einer zuvor aufgezeichneten Sprachaufnahme generiert sein.

Nach einer weiteren Möglichkeit kann vorgesehen sein, dass die Sprachvorlage vorgegebene Wörter und/oder Sätze umfasst, wobei durch das Abrufen gemäß Schritt b) und/oder durch neues Kombinieren der Sprachsegmente, insbesondere nach Schritt b), als Sprachausgabe synthetisierte akustische Wörter und/oder Sätze und/oder Satzkombinationen entsprechend der Sprachvorlage erzeugt werden. Dabei ist es auch denkbar, dass die Sprachvorlage neben den Vorlagensegmenten noch weitere Vorlagen-Informationen umfasst, wobei das Neukombinieren in Abhängigkeit von diesen Vorlagen-Informationen erfolgt. Weiter ist es auch denkbar, dass weitere Vorlagen-Informationen und/oder sämtliche Vorlagen-Informationen durch die entfernte Recheneinheit übertragen werden. Hierdurch kann besonders flexibel eine Sprachsynthese erfolgen.

Optional kann es vorgesehen sein, dass die einzelnen Sprachsegmente und/oder die jeweiligen Audiodaten und/oder die Sprachvorlage, insbesondere die einzelnen Vorlagensegmente, ausschließlich vorgegebene Sätze und/oder Wörter umfassen, wobei die Sätze und/oder Wörter insbesondere rezeptbezogen sind. Die erfindungsgemäße Vorrichtung und/oder das Haushaltsgerät kann beispielsweise als eine Küchenmaschine ausgebildet sein. Dabei ist es denkbar, dass die Küchenmaschine verschiedene Rezeptinformationen verarbeiten kann. Die Rezeptinformationen umfassen dabei beispielsweise eine Anleitung zur Bedienung der Küchenmaschine und/oder für die Zubereitung eines bestimmten Rezepts und/oder Betriebsinformationen für die Küchenmaschine. Anhand dieser Betriebsinformationen ist gegebenenfalls eine zumindest teilautomatisierte Durchführung der Rezepte durch die Küchenmaschine möglich. Es ist denkbar, dass die Rezepte Anweisungen für einen Bediener (Nutzer) der Küchenmaschine umfassen, welche beispielsweise in Abhängigkeit von einem Betriebszustand der Küchenmaschine sprachlich ausgegeben werden sollen. Der Betriebszustand ist insbesondere ein bestimmter Zeitpunkt zum Beispiel im Rezeptablauf und/oder Zeiten der Zubereitung durch die Küchenmaschine (beispielsweise die Aufheizphase) und/oder abhängig vom Betrieb der Küchenmaschine (zum Beispiel durch das Einschalten und/oder Ausschalten des Rührwerks bedingt, verschiedene Betriebsphasen, oder dergleichen). Unter den Anweisungen sind beispielsweise rezeptbezogene Sätze und/oder Wörter zu verstehen. Die rezeptbezogenen Sätze und/oder Wörter umfassen dabei vorzugsweise Bedienungshinweise für die Küchenmaschine (zum Beispiel die einzustellende Heiztemperatur und/oder Rührwerksgeschwindigkeit) und/oder Maßangaben (zum Beispiel das Hinzugeben einer bestimmten Menge einer Zutat). Insbesondere handelt es sich um die Informationen, welche zumindest teilweise in Abhängigkeit von oder durch das Rezept auf einem Display der Küchenmaschine wiedergegeben werden. Hierdurch wird die Bedienung der Küchenmaschine stark verbessert und vereinfacht.

Es kann im Rahmen der Erfindung vorgesehen sein, dass die Sprachvorlage in einer oder mehreren Vorgabedateien gespeichert ist, insbesondere in und/oder mit und/oder zugeordnet zu einem Rezept für die Küchenmaschine, wobei vorzugsweise das Rezept mit der Sprachvorlage in einer mobilen Datenspeichereinheit gespeichert ist. Die mobile Datenspeichereinheit umfasst dabei beispielsweise eine Schnittstelleneinheit, welche zur Kommunikation und/oder Datenübertragung mit einer Schnittstelle, insbesondere Datenübertragungsschnittstelle, der erfindungsgemäßen Vorrichtung ausgeführt ist. Weiter ist es denkbar, dass ein Speicher der mobilen Datenspeichereinheit zumindest ein Rezept und/oder zumindest eine Sprachvorlage und/oder zumindest ein zusätzliches Sprachsegment und/oder zumindest eine zusätzliche Positionsinformation umfasst. Dabei kann es vorgesehen sein, dass wenn eine lokale Identifizierung erfolglos ist, zunächst (insbesondere noch vor einer entfernten Identifizierung) eine datenspeicherseitige Identifizierung der in der mobilen Datenspeichereinheit vorgesehenen Sprachsegmente und/oder Positionsinformationen erfolgt, und bevorzugt erst bei erfolgloser datenspeicherseitigen Identifizierung eine entfernte Identifizierung erfolgt. Für die datenspeicherseitigen Identifizierung können insbesondere die Sprachsegmente der mobilen Datenspeichereinheit beispielsweise über die Schnittstelle an die erfindungsgemäße Vorrichtung übertragen und/oder anschließend im lokalen Informationsobjekt integriert werden. Dies ermöglicht eine flexible Erweiterung der lokalen Sprachsegmente.

Des Weiteren ist es denkbar, dass die Sprachsegmente in Abhängigkeit von einem Rezept zeitlich nacheinander in einer definierten Reihenfolge ausgegeben werden, wobei insbesondere die Sprachvorlage zumindest ein Vorlagensegment umfasst, welches zumindest eine Anweisung oder einen Hinweis für einen Nutzer (Bediener) der erfindungsgemäßen Vorrichtung, insbesondere des Haushaltsgeräts umfasst. Die Reihenfolge kann dabei beispielsweise durch das Rezept und/oder durch Informationen der mobilen Datenspeichereinheit vorgegeben werden. Hierdurch wird die Bedienung des Haushaltsgeräts verbessert und der Komfort weiter erhöht.

Es ist ferner denkbar, dass die Erzeugung der Sprachausgabe, insbesondere die zeitliche Ausgabe der Sprachsegmente und/oder die zeitlich wiederholte Durchführung der Schritte a) bis c), in Abhängigkeit von Betriebsparametern der erfindungsgemäßen Vorrichtung, insbesondere des Haushaltsgeräts, und/oder Bedienungshandlungen eines Nutzers der erfindungsgemäßen Vorrichtung, insbesondere des Haushaltsgeräts, erfolgt. Die Betriebsparameter beeinflussen dabei vorzugsweise den Betriebszustand, wobei die Betriebsparameter zum Beispiel auch verschiedene Funktionen, Voreinstellungen und/oder Programmabläufe (Programme) für den Betrieb des Haushaltsgeräts umfassen können. Durch die Betriebsparameter lassen sich insbesondere verschiedene Abläufe des Haushaltsgeräts automatisiert betreiben, wie beispielsweise der Betrieb des Rührwerks mit zeitabhängig eingestellter Drehzahl und/oder zeitabhängig eingestellter Heiztemperatur. Es ist beispielsweise denkbar, dass die Sprachausgabe dann erfolgt, wenn nach der Durchführung eines bestimmten Programms eine Interaktion und/oder Handlung eines Benutzers (Bedieners) notwendig ist. Hierdurch wird ebenfalls eine Verbesserung des Komforts erzielt.

Ebenfalls Gegenstand der Erfindung ist eine Vorrichtung nach Anspruch 13. Vorzugsweise ist weiter eine Elektronik, insbesondere mit einer Verarbeitungsvorrichtung, vorgesehen. Insbesondere ist weiter vorgesehen, dass die akustische Ausgabevorrichtung und/oder die Verarbeitungsvorrichtung derart ausgeführt ist, dass
- zumindest ein vorgespeichertes Sprachsegment in Abhängigkeit von einer digitalen Sprachvorlage identifizierbar ist,
- das identifizierte Sprachsegment abrufbar ist, und insbesondere
- das abgerufene Sprachsegment akustisch ausgebbar ist,
wobei vorzugsweise mehrere Sprachsegmente in dem Informationsobjekt vorspeicherbar sind, und jeweils anhand zumindest einer Positionsinformation im Informationsobjekt identifizierbar und/oder abrufbar sind. Damit bringt die erfindungsgemäße Vorrichtung die gleichen Vorteile mit sich, wie sie ausführlich mit Bezug auf ein erfindungsgemäßes Verfahren beschrieben worden sind. Zudem kann vorzugsweise die erfindungsgemäße Vorrichtung gemäß einem erfindungsgemäßen Verfahren betreibbar sein. Das Haushaltsgerät kann dabei beispielsweise als ein Staubsauger und/oder ein Küchengerät oder dergleichen ausgebildet sein. Die erfindungsgemäße Vorrichtung und/oder erfindungsgemäße Küchenmaschine dient insbesondere im Haushaltsbereich zur Bearbeitung von Lebensmitteln, bevorzugt auch zur (insbesondere teilautomatisierten) Herstellung von Speisen. Weiter weist die erfindungsgemäße Vorrichtung vorzugsweise zumindest ein Heizelement (Heizung) zur Erwärmung der Speisen auf. Zur Bearbeitung der Lebensmittel umfasst die erfindungsgemäße Vorrichtung vorzugsweise das Rührgefäß, welches bevorzugt (insbesondere bodenseitig) das Rührwerk und/oder das Heizelement aufweist. Es ist weiter insbesondere ein Elektromotor vorgesehen, welcher das Rührwerk antreibt. Das Heizelement dient insbesondere zur Erwärmung der sich im Rührgefäß befindlichen Lebensmittel und kann vorzugsweise mit einer einstellbaren Heiztemperatur betrieben werden. Zur Einstellung verschiedener Betriebsparameter, wie zum Beispiel einer Rührwerksdrehzahl und/oder der Heiztemperatur und/oder verschiedener Betriebsprogramme, ist beispielsweise ein Bedienfeld, insbesondere mit einem Display, vorgesehen. Das Display ist beispielsweise als ein Touchscreen ausgebildet, worüber ein Bediener der Vorrichtung und/oder der Küchenmaschine die Betriebsparameter einstellen und/oder den Betrieb aktivieren kann. Um die Bedienung, insbesondere die Einstellung und die Aktivierung der Betriebsparameter, zu unterstützen, können Rezepte vorgesehen sein, welche zum Beispiel Voreinstellungen für die Betriebsparameter umfassen und entsprechende Anweisungen zur Bedienung zur Ausgabe an dem Display enthalten. Die Rezepte können beispielsweise in einer mobilen Datenspeichereinheit außerhalb der erfindungsgemäßen Vorrichtung und/oder in der Datenspeichereinheit innerhalb der erfindungsgemäßen Vorrichtung gespeichert sein.

Bevorzugt kann im Rahmen der Erfindung vorgesehen sein, dass die Vorrichtung eine Schnittstelle umfasst, wobei die Schnittstelle derart ausgebildet ist, dass eine Datenkommunikation mit einer mobilen Datenspeichereinheit durchführbar ist, um die digitale Sprachvorlage von der mobilen Datenspeichereinheit abzurufen. Die Schnittstelle ist dabei vorzugsweise als Datenübertragungsschnittstelle ausgeführt, welche insbesondere in einer Außenfläche des Gehäuses der Vorrichtung, insbesondere der Küchenmaschine, angeordnete elektrisch leitende Kontaktelemente aufweist. Weiter ist die Schnittstelle beispielsweise als eine serielle Schnittstelle und/oder eine Bussystem-Schnittstelle, vorzugsweise als eine USB (Universal Serial Bus)-Schnittstelle, ausgebildet. Die Schnittstelle ist beispielsweise als eine USB-Schnittstelle und/oder als eine Mobilfunkschnittstelle und/oder als eine Netzwerkschnittstelle ausgebildet. Weiter kann es vorgesehen sein, dass die erfindungsgemäße Vorrichtung eine weitere Schnittstelle, insbesondere eine Netzwerkschnittstelle, insbesondere zur Kommunikation und/oder Datenübertragung mit der entfernten Recheneinheit, insbesondere für die Schritte a) und/oder b) und/oder c) eines erfindungsgemäßen Verfahrens, umfasst. Hierdurch wird der Vorteil erzielt, dass eine besonders zuverlässige und darüber hinaus ressourcensparende Spracherzeugung verwirklicht werden kann. Weiter ist es denkbar, dass bei einer Verbindung der Schnittstelle mit der mobilen Datenspeichereinheit zumindest ein Rezept oder sämtliche Rezepte der mobilen Datenspeichereinheit ausgelesen werden. Es kann weiter vorgesehen sein, dass bei dem Abrufen eines Rezeptes ein einzelnes, einige oder sämtliche Sprachvorlagen und/oder Vorlagensegmente des Rezeptes ausgelesen und/oder ausgewertet werden. Hierbei kann zum Beispiel bereits eine lokale Identifizierung und bei Bedarf eine entfernte Identifizierung stattfinden.

Ebenfalls Gegenstand der Erfindung ist eine Küchenmaschine, vorzugsweise mit einem Rührgefäß und einem Rührwerk in dem Rührgefäß, bevorzugt aufweisend mindestens eine nicht-flüchtige Datenspeichereinheit, wobei in der Datenspeichereinheit zumindest ein persistentes Informationsobjekt speicherbar ist, und/oder mindestens eine akustische Ausgabevorrichtung, insbesondere mit einem Lautsprecher. Hierbei ist insbesondere vorgesehen, dass die Küchenmaschine gemäß einem erfindungsgemäßen Verfahren betreibbar ist. Damit bringt die erfindungsgemäße Küchenmaschine die gleichen Vorteile mit sich, wie sie ausführlich mit Bezug auf ein erfindungsgemäßes Verfahren und/oder eine erfindungsgemäße Vorrichtung beschrieben worden sind.

Ebenfalls Gegenstand der Erfindung ist ein Computerprogrammprodukt nach Anspruch 15. Das Computerprogrammprodukt umfasst zum Beispiel eine (insbesondere durch eine Verarbeitungsvorrichtung ausführbare) Software und/oder eine Firmware und/oder einen Datenträger, wie einen Datenspeicher oder eine mobile Datenspeichereinheit oder eine Festplatte oder dergleichen, und/oder wenigstens eine Datei, jeweils insbesondere mit dem Programmablauf zur Durchführung des erfindungsgemäßen Verfahrens. Damit bringt das erfindungsgemäße Computerprogrammprodukt die gleichen Vorteile mit sich, wie sie ausführlich mit Bezug auf ein erfindungsgemäßes Verfahren und/oder eine erfindungsgemäße Vorrichtung und/oder eine erfindungsgemäße Küchenmaschine beschrieben worden sind.

Beschrieben ist ferner eine mobile Datenspeichereinheit, insbesondere mit Rezepten für eine erfindungsgemäße Küchenmaschine, welche insbesondere durch das erfindungsgemäße Verfahren betreibbar ist. Beschrieben ist ferner ein System mit der erfindungsgemäßen Vorrichtung und/oder mit dem erfindungsgemäßen Computerprogrammprodukt und/oder mit der mobilen Datenspeichereinheit, wobei das System vorzugsweise nach einem erfindungsgemäßen Verfahren betreibbar ist.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in der Beschreibung erwähnten Merkmale jeweils einzeln für sich oder in beliebiger Kombination erfindungswesentlich sein, sofern sie unter den Definitionsbereich der Ansprüche fallen. Es zeigen:
- Fig. 1: eine schematische Darstellung einer erfindungsgemäßen Vorrichtung, insbesondere einer Küchenmaschine,
- Fig. 2 und 3: eine schematische Darstellung zur Visualisierung eines erfindungsgemäßen Verfahrens,
- Fig. 4: eine schematische Darstellung zur Visualisierung eines erfindungsgemäßen Verfahrens, insbesondere einer lokalen Identifizierung,
- Fig. 5: eine schematische Darstellung zur Visualisierung eines erfindungsgemäßen Verfahrens, insbesondere einer entfernten Identifizierung und
- Fig. 6: eine schematische Darstellung zur Visualisierung eines erfindungsgemäßen Verfahrens.

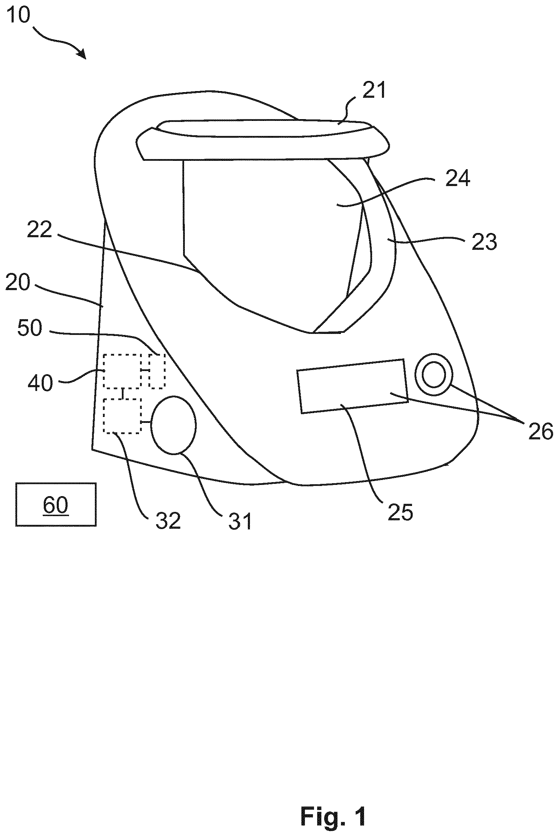

Fig. 1 zeigt eine erfindungsgemäße Vorrichtung 10, welche im gezeigten Ausführungsbeispiel als Küchenmaschine 10 ausgeführt ist. Selbstverständlich gelten die nachfolgend beschriebenen Merkmale auch in Bezug auf weitere Vorrichtungen, insbesondere auf ein Haushaltsgerät 10, zum Beispiel einen Staubsauger oder dergleichen. Die Vorrichtung 10 umfasst dabei ein Gehäuse 20, welches eine Aufnahme 22 für ein Rührgefäß 24 umfasst. Das Rührgefäß 24 ist beispielsweise durch einen Deckel 21 verschließbar, weist beispielsweise einen Handgriff 23 auf, und ein nicht gezeigtes Rührwerk und/oder ein Heizelement ist bevorzugt im Inneren des Rührgefäßes 24 anordenbar und/oder angeordnet. Weiter weist die erfindungsgemäße Vorrichtung 10 ein Bedienfeld 26 auf, welches insbesondere ein Display 25, vorzugsweise einen Touchscreen 25, umfasst. Das Display 25 fungiert damit beispielsweise sowohl als Eingabe- als auch als Ausgabemittel. Als weiteres Eingabemittel kann beispielsweise ein Drehregler, Stellschalter oder dergleichen vorgesehen sein. Über das Bedienfeld 26 wird insbesondere ermöglicht, dass ein Bediener der Vorrichtung 10 Betriebsparameter, wie die Rührwerk-Drehzahl, die Heiztemperatur und/oder die Zeitdauer und/oder verschiedene Programme der Vorrichtung 10, einstellen und/oder aktivieren und/oder deaktivieren kann. Weiter kann über das Display 25 auch die Ausgabe von rezeptbezogenen Anweisungen und/oder Hinweisen und/oder grafischen Bedienelementen erfolgen. Über die grafischen Bedienelemente, welche bevorzugt Bestandteil einer grafischen Benutzeroberfläche sind, kann als Eingabemittel eine Bedienung der Vorrichtung 10 durchgeführt werden. Die Rezepte, welche beispielsweise die rezeptbezogenen Anweisungen und/oder rezeptbezogene Vorlagensegmente umfassen, sind beispielsweise in einer mobilen Datenspeichereinheit 60 vorgespeichert. Die mobile Datenspeichereinheit 60 ist vorzugsweise tragbar ausgeführt und separat von der erfindungsgemäßen Vorrichtung 10 ausgebildet. Die erfindungsgemäße Vorrichtung 10 weist außenseitig eine Aufnahme 31 zur Aufnahme der mobilen Datenspeichereinheit 60 auf. Diese Aufnahme 31 umfasst beispielsweise Kontaktelemente, durch welche eine lösbare elektrische Verbindung bzw. Kontaktierung mit einer Schnittstelleneinheit der mobilen Datenspeichereinheit 60 zur Datenübertragung möglich ist. Hierdurch können Daten der mobilen Datenspeichereinheit 60, zum Beispiel die Rezepte, an die erfindungsgemäße Vorrichtung 10 übertragen und zum Beispiel in einer Datenspeichereinheit 50 der erfindungsgemäßen Vorrichtung 10 gespeichert werden. Weiter kann die Datenspeichereinheit 50 das erfindungsgemäße Computerprogrammprodukt mit dem erfindungsgemäßen Verfahren 100 aufweisen bzw. repräsentieren. Die Datenspeichereinheit 50 ist weiter vorzugsweise elektrisch mit einer Ausgabevorrichtung 40 und/oder mit einer Schnittstelle 32 verbunden. Die Schnittstelle 32 dient vorzugsweise zur Datenübertragung und/oder zur Verbindung mit der mobilen Datenspeichereinheit 60 und ist insbesondere als Funk- und/oder USB-Schnittstelle ausgebildet. Die Schnittstelle 32 ist zum Beispiel elektrisch mit den Kontaktelementen im Bereich der Aufnahme 31 verbunden. Weiter kann die Schnittstelle 32 oder eine weitere Schnittstelle 32 eine Netzwerkschnittstelle aufweisen, um eine Datenübertragung und/oder digitale Kommunikation zu einer entfernten Recheneinheit zu ermöglichen.

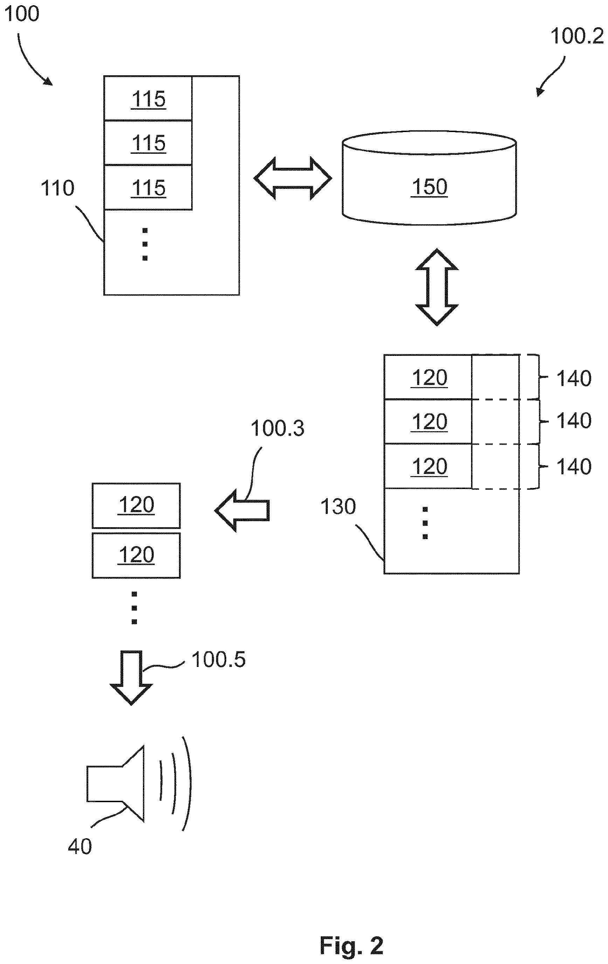

In den Fign. 2 bis 6 ist schematisch ein erfindungsgemäßes Verfahren 100 visualisiert. Zunächst wird dabei eine Sprachvorlage 110, zum Beispiel durch die mobile Datenspeichereinheit 60 und/oder durch die Rezepte, bereitgestellt. Die Sprachvorlage 110 umfasst mehrere Vorlagensegmente 115, welche entsprechenden Sprachsegmenten 120 zugeordnet werden können. Die Vorlagensegmente 115 und/oder die entsprechenden Sprachsegmente 120 umfassen dabei vorzugsweise rezeptbezogene Informationen, zum Beispiel jeweils Anweisungen aus dem Rezept für einen Bediener (Nutzer) der erfindungsgemäßen Vorrichtung 10. Das Vorlagensegment 115 ist beispielsweise eine Textinformation, wobei die Sprachvorlage 110 vorzugsweise in der Form einer Datei und besonders bevorzugt in der mobilen Datenspeichereinheit 60 gespeichert ist. So weist ein erstes Vorlagensegment 115.1 beispielsweise die (Text-) Information auf, dass eine erste Zutat vorbereitet werden soll. Ein zugeordnetes erstes Sprachsegment 120.1 weist dabei zum Beispiel eine Sprachausgabe in Form von Audiodaten auf, dass die erste Zutat vorbereitet werden soll. Ein zweites Vorlagensegment 115.2 und/oder ein drittes Vorlagensegment 115.3 umfassen entsprechend beispielsweise ähnliche Anweisungen, wie zum Beispiel die Einstellung eines bestimmten Betriebsparameters (zum Beispiel Einstellung der Rührstufe, Aufsetzen des Deckels 21 oder dergleichen). Ein zweites Sprachsegment 120.2 und ein drittes Sprachsegment 120.3 umfassen dabei entsprechende Sprachausgaben. Das erste Sprachsegment 120.1 und/oder das zweite Sprachsegment 120.2 und/oder das dritte Sprachsegment 120.3 und/oder sämtliche Sprachsegmente 120 können dabei in einem einzigen Informationsobjekt 130, insbesondere einer Datei, vorzugsweise einer Audiodatei gespeichert sein. Das Informationsobjekt 130 enthält somit vorzugsweise sämtliche Sprachinformationen, welche zur sprachlichen akustischen Ausgabe der Informationen der Vorlagensegmente 115 notwendig sind. Um die Sprachsegmente 120 aus dem Informationsobjekt 130 abrufen zu können, werden Positionsinformationen 140 benötigt, wobei zum Beispiel eine erste Positionsinformation 140.1 dem ersten Sprachsegment 120.1, eine zweite Positionsinformation 140.2 dem zweiten Sprachsegment 120.2 und eine dritte Positionsinformation 140.3 dem dritten Sprachsegment 120.3 zugeordnet ist.

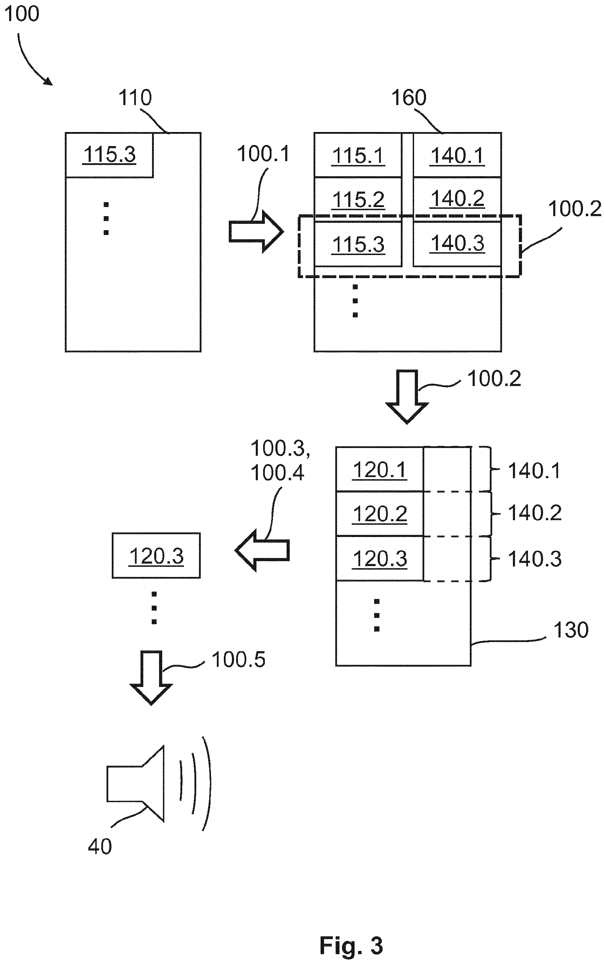

Die Vorlagensegmente 115 werden beispielsweise beim Ausführen eines Rezeptes rezeptbezogen aus der Sprachvorlage 110, zum Beispiel zeitabhängig, aufgerufen. Das Aufrufen beziehungsweise das Abrufen der Vorlagensegmente 115 aus der Sprachvorlage 110 erfolgt dabei zunächst gemäß einem ersten Verfahrensschritt 100.1. Um nun bei einem gegebenen Vorlagensegment 115 ein entsprechendes Sprachsegment 120 abzurufen und/oder akustisch auszugeben, muss die richtige Position des zugeordneten Sprachsegments 120 im Informationsobjekt 130 ermittelt werden. Hierzu erfolgt zunächst gemäß einem zweiten Verfahrensschritt 100.2 ein Identifizieren des vorgespeicherten Sprachsegments 120 in Abhängigkeit von der digitalen Sprachvorlage 110. Die Identifizierung wird vorzugsweise mittels einer Datenbank 150 durchgeführt, welche Datenbankeinträge 160 umfasst, die das gegebene Vorlagensegment 115 mit entsprechenden Positionsinformationen 140 verknüpfen. Dies wird auch in Fig. 3 näher gezeigt. Anhand der Positionsinformationen 140 kann nun das Sprachsegment 120 im Informationsobjekt 130 gefunden und somit identifiziert werden und gemäß einem dritten Verfahrensschritt 100.3 das identifizierte Sprachsegment 120 an der richtigen Position abgerufen werden. In Fig. 2 ist dabei auch veranschaulicht, dass die auf diese Weise abgerufenen identifizierten Sprachsegmente 120 anschließend gemäß einem fünften Verfahrensschritt 100.5 akustisch durch die Ausgabevorrichtung 40 ausgegeben werden.

In Fig. 3 ist weiter dargestellt, dass vor der akustischen Ausgabe der abgerufenen Sprachsegmente 120 die identifizierten Sprachsegmente 120 gemäß einem vierten Verfahrensschritt 100.4 kombiniert werden, um eine flüssige Sprachausgabe zu ermöglichen. Dies erfolgt beispielsweise dadurch, dass die Sprachsegmente 120 in der auszugebenden Reihenfolge in eine neue Audiodatei geschrieben werden und/oder zur kombinierten Ausgabe digital vorbereitet werden.

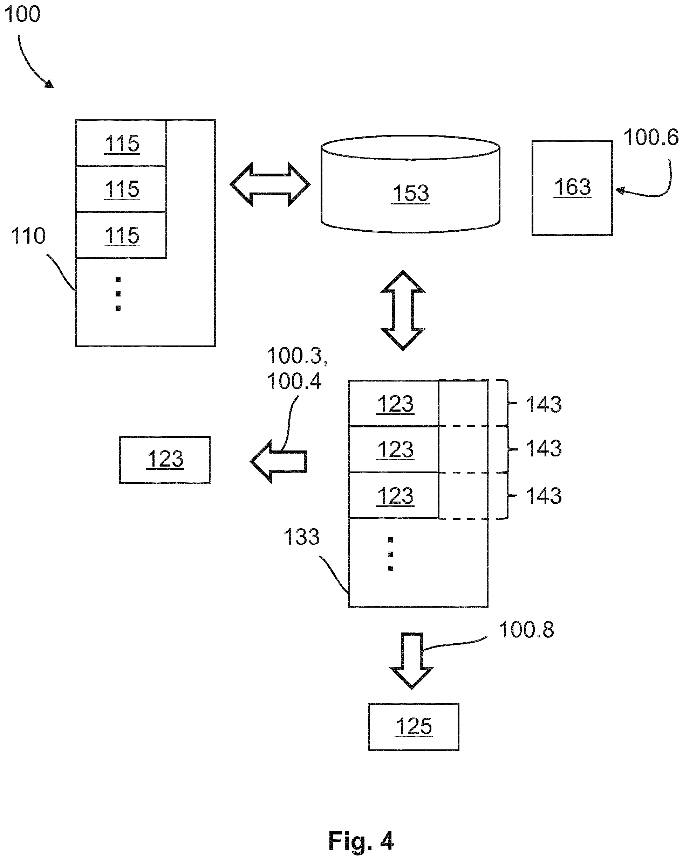

Es ist weiter vorgesehen, dass zunächst eine lokale Identifizierung gemäß einem sechsten Verfahrensschritt 100.6 erfolgt und erst bei erfolgloser lokaler Identifizierung gemäß einem siebten Verfahrensschritt 100.7 eine entfernte Identifizierung der Sprachsegmente 120 durchgeführt wird. Dabei ist in Fig. 4 zu sehen, dass für die lokale Identifizierung eine lokale Datenbank 153 genutzt wird, welche lokal gespeicherte lokale Datenbankeinträge 163 umfasst. Gemäß den lokalen Datenbankeinträgen 163 kann dabei ein gegebenes Vorlagensegment 115 einer lokalen Positionsinformation 143 zugeordnet werden. Anhand dieser lokalen Positionsinformation 143 kann dann ein Sprachsegment 120 lokal identifiziert werden, und dieses lokal identifizierte Sprachsegment 123 aus einem lokalen Informationsobjekt 133, insbesondere einer lokalen Datei, abgerufen werden.

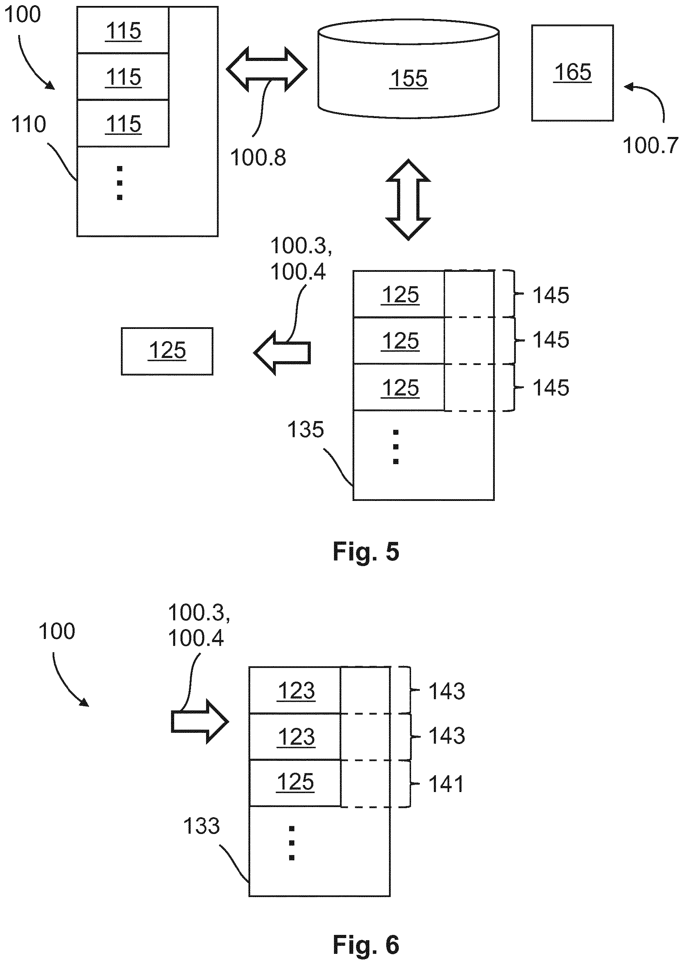

In Fig. 5 ist gezeigt, dass bei einer erfolglosen lokalen Identifizierung, das heißt wenn zu einem gegebenen Vorlagensegment 115 kein Sprachsegment 120 in dem lokalen Informationsobjekt 133 verfügbar ist, gemäß einem achten Verfahrensschritt 100.8 diese Suchanfrage an eine entfernte Recheneinheit vernetzt weiter vermittelt wird. Hier wird entsprechend in einer entfernten Datenbank 155 auf entfernte Datenbankeinträge 165 dieser entfernten Datenbank 155 zugegriffen. Der Datenbankzugriff und/oder die Datenübertragung und/oder die Übertragung von entsprechenden Anweisungen zur entfernten Identifizierung erfolgt dabei zum Beispiel über ein Netzwerk. Wenn zu dem gegebenen Vorlagensegment 115 ein entferntes Sprachsegment 120 verfügbar ist, so findet sich zu diesem Sprachsegment 120 eine entsprechende entfernte Positionsinformation 145 in der entfernten Datenbank 155 beziehungsweise in dem entsprechenden Datenbankeintrag. Diese entfernte Positionsinformation 145 ermöglicht dabei das Abrufen des entfernt identifizierten Sprachsegments 125 in dem entfernten Informationsobjekt 135. Sollte das Sprachsegment 120 noch nicht vorhanden sein, so kann ein neues Sprachsegment 120 durch die entfernte Recheneinheit generiert werden. Das entfernt identifizierte Sprachsegment 125 beziehungsweise das entfernt generierte Sprachsegment 125 wird anschließend abgerufen und/oder über das Netzwerk an die erfindungsgemäße Vorrichtung 10 übertragen.

In Fig.6 ist weiter zu sehen, dass das entfernt identifizierte Sprachsegment 125 und/oder das entfernt generierte Sprachsegment 125 anschließend in das lokale Informationsobjekt 133 integriert werden kann. Hierzu wird eine neue Positionsinformation 141 generiert, welche die neue Position des integrierten Sprachsegments 125 im lokalen Informationsobjekt 133 angibt.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, sofern sie unter den Definitionsbereich der Ansprüche fallen.

### Bezuaszeichenliste

- 10: Küchenmaschine, Haushaltsgerät, Vorrichtung

- 20: Gehäuse
- 21: Deckel
- 22: Rührgefäß-Aufnahme
- 23: Handgriff
- 24: Rührgefäß
- 25: Display
- 26: Bedienfeld

- 31: Aufnahme für 60
- 32: Schnittstelle

- 40: Lautsprecher, Ausgabevorrichtung

- 50: Datenspeichereinheit

- 60: Mobile Datenspeichereinheit

- 100: Verfahren
- 100.1: Erster Verfahrensschritt, Abrufen der Sprachvorlage
- 100.2: Zweiter Verfahrensschritt, Identifizieren
- 100.3: Dritter Verfahrensschritt, Abrufen der Sprachsegmente
- 100.4: Vierter Verfahrensschritt, Kombinieren der Sprachsegmente
- 100.5: Fünfter Verfahrensschritt, Ausgeben
- 100.6: Sechster Verfahrensschritt, Lokale Identifizierung
- 100.7: Siebter Verfahrensschritt, Entfernte Identifizierung
- 100.8: Achter Verfahrensschritt, Weitervermittlung der Suchanfrage

- 110: Sprachvorlage
- 115: Vorlagensegment
- 115.1: Erstes Vorlagensegment
- 115.2: Zweites Vorlagensegment
- 115.3: Drittes Vorlagensegment

- 120: Sprachsegment
- 120.1: Erstes Sprachsegment
- 120.2: Zweites Sprachsegment
- 120.3: Drittes Sprachsegment

- 123: Lokal identifiziertes Sprachsegment
- 125: Entfernt identifiziertes Sprachsegment, entfernt generiertes Sprachsegment
- 130: Informationsobjekt, Datei, Audiodatei
- 133: Lokales Informationsobjekt
- 135: Entferntes Informationsobjekt

- 140: Positionsinformation, Zeitinformation, Indizierungsinformation
- 140.1: Erste Positionsinformation
- 140.2: Zweite Positionsinformation
- 140.3: Dritte Positionsinformation

- 141: Neue Positionsinformation
- 143: Lokale Positionsinformation
- 145: Entfernte Positionsinformation
- 150: Datenbank
- 153: Lokale Datenbank
- 155: Entfernte Datenbank

- 160: Datenbankeinträge
- 163: Lokale Datenbankeinträge
- 165: Entfernte Datenbankeinträge

## Patentansprüche

1. Verfahren (100) zur Erzeugung einer akustischen Sprachausgabe, bei einer elektromotorisch betriebenen Küchenmaschine (10) mit einem Rührgefäß (24) und einem Rührwerk in dem Rührgefäß (24),
mit den nachfolgenden Schritten:
a) Identifizieren von zumindest einem vorgespeicherten Sprachsegment (120) in Abhängigkeit von einer digitalen Sprachvorlage (110),
b) Abrufen des identifizierten Sprachsegmentes (120),
c) Akustisches Ausgeben des abgerufenen Sprachsegmentes (120),
wobei mehrere Sprachsegmente (120) in einem persistenten Informationsobjekt (130) vorgespeichert sind, und jeweils anhand zumindest einer Positionsinformation (140) im Informationsobjekt (130) identifiziert und/oder abgerufen werden, wobei die Sprachsegmente (120) in Abhängigkeit von einem Rezept zeitlich nacheinander in einer definierten Reihenfolge ausgegeben werden, wobei die Sprachvorlage (110) zumindest ein Vorlagensegment (115) umfasst, welches zumindest eine Anweisung oder einen Hinweis für einen Nutzer der Küchenmaschine (10) umfasst, wobei das Informationsobjekt (130) als einzelne Audiodatei (130) ausgestaltet ist, wobei die Positionsinformation (140) eine Zeitinformation (140) für die Sprachsegmente (120) der Audiodatei (130) ist,
wobei die Sprachsegmente (120) jeweils Audiodaten umfassen, welche dazu ausgeführt sind, über eine Ausgabevorrichtung (40) ausgegeben zu werden, wobei die Reihenfolge durch das Rezept vorgegeben ist.

2. Verfahren (100) nach einem der vorhergehenden Ansprüche,
**dadurch gekennzeichnet,**
**dass** zur Identifizierung gemäß Schritt a) zumindest ein Vorlagensegment (115) der Sprachvorlage (110) abgerufen wird, und insbesondere ein Zuordnen des Vorlagensegments (115) zu der Positionsinformation (140) erfolgt, um das zumindest eine Sprachsegment (120) zu identifizieren, wobei vorzugsweise
zur Identifizierung gemäß Schritt a) eine lokale Identifizierung durch ein Zuordnen des Vorlagensegments (115) zu der Positionsinformation (140) eines lokalen Informationsobjekts (133) erfolgt, um eine lokale Positionsinformation (143) zu ermitteln, wobei insbesondere das lokale Informationsobjekt (133) in einer nicht-flüchtigen Datenspeichereinheit (50) der Küchenmaschine (10) gespeichert ist.

3. Verfahren (100) nach Anspruch 2,
**dadurch gekennzeichnet,**
**dass** gemäß Schritt a) eine entfernte Identifizierung und/oder Generierung des Sprachsegmentes (120) anhand des Vorlagensegments (115) erfolgt, insbesondere nur dann, wenn eine lokale Identifizierung erfolglos war, wobei vorzugsweise gemäß Schritt b) das entfernt identifizierte oder entfernt generierte Sprachsegment (125) vernetzt abgerufen wird, wobei bei der entfernten Identifizierung und/oder Generierung eine vernetzte Datenübertragung erfolgt und/oder die Identifizierung und/oder Generierung nicht lokal, sondern räumlich getrennt, durch eine entfernte Recheneinheit erfolgt.

4. Verfahren (100) nach Anspruch 3,
**dadurch gekennzeichnet,**
**dass** gemäß Schritt a) eine entfernte Identifizierung durch ein Zuordnen des Vorlagensegments (115) zu der Positionsinformation (140) eines entfernten Informationsobjekts (135) erfolgt, um eine entfernte Positionsinformation (145) zu ermitteln, bevorzugt nur dann, wenn eine lokale Identifizierung erfolglos war, wobei vorzugsweise gemäß Schritt a) und/oder b) ein Sprachsegment (120) des entfernten Informationsobjekts (135) anhand der entfernten Positionsinformation (145) identifiziert und/oder abgerufen wird, und insbesondere vernetzt an die Küchenmaschine (10) übertragen wird.

5. Verfahren (100) nach einem der vorhergehenden Ansprüche,
**dadurch gekennzeichnet,**
**dass** die Identifizierung und/oder Zuordnung anhand von lokalen Datenbankeinträgen (163) einer lokalen Datenbank (153) und/oder anhand von entfernten Datenbankeinträgen (165) einer entfernten Datenbank (155) erfolgt, wobei insbesondere die Datenbankeinträge (160) eine erste Information zu einem Vorlagensegment (115) mit einer zweiten Information zu einer Positionsinformation (140) miteinander verknüpfen, wobei die entfernte Datenbank (155) von einer entfernten Recheneinheit ausgewertet und/oder verarbeitet und/oder gespeichert ist.

6. Verfahren (100) nach einem der vorhergehenden Ansprüche,
**dadurch gekennzeichnet,**
**dass** das Sprachsegment (120), insbesondere das entfernt generierte Sprachsegment (125), durch ein Text-to-Speech-System generierte oder von natürlicher Sprache aufgezeichnete Audiodaten umfasst.

7. Verfahren (100) nach einem der vorhergehenden Ansprüche,
**dadurch gekennzeichnet,**
**dass** die einzelnen Sprachsegmente (120) und/oder die jeweiligen Audiodaten zumindest Sätze und/oder Wörter und/oder Phoneme und/oder Diphone und/oder Silben und/oder Morpheme und/oder Phrasen umfassen.

8. Verfahren (100) nach einem der vorhergehenden Ansprüche,
**dadurch gekennzeichnet,**
**dass** die Sprachvorlage (110) vorgegebene Wörter und/oder Sätze umfasst, wobei durch das Abrufen gemäß Schritt b) und/oder durch neues Kombinieren der Sprachsegmente (120), insbesondere nach Schritt b), als Sprachausgabe synthetisierte akustische Wörter und/oder Sätze und/oder Satzkombinationen entsprechend der Sprachvorlage (110) erzeugt werden.

9. Verfahren (100) nach einem der vorhergehenden Ansprüche,
**dadurch gekennzeichnet,**
**dass** die einzelnen Sprachsegmente (120) und/oder die jeweiligen Audiodaten und/oder die Sprachvorlage (110), insbesondere die einzelnen Vorlagensegmente (115), ausschließlich vorgegebene Sätze und/oder Wörter umfassen, wobei die Sätze und/oder Wörter insbesondere rezeptbezogen sind.

10. Verfahren (100) nach einem der vorhergehenden Ansprüche,
**dadurch gekennzeichnet,**
**dass** die Sprachvorlage (110) in einer oder mehreren Vorgabedateien gespeichert ist, insbesondere in und/oder mit und/oder zugeordnet zu einem Rezept für die Küchenmaschine (10), wobei vorzugsweise das Rezept mit der Sprachvorlage (110) in einer mobilen Datenspeichereinheit (60) gespeichert ist.

11. Verfahren (100) nach einem der vorhergehenden Ansprüche,
**dadurch gekennzeichnet,**
**dass** das Rezept Anweisungen für einen Bediener der Küchenmaschine (10) umfasst, welche in Abhängigkeit von einem Betriebszustand der Küchenmaschine (10) sprachlich ausgegeben werden.

12. Verfahren (100) nach einem der vorhergehenden Ansprüche,
**dadurch gekennzeichnet,**
**dass** die Erzeugung der Sprachausgabe, insbesondere die zeitliche Ausgabe der Sprachsegmente (120) und/oder die zeitlich wiederholte Durchführung der Schritte a) bis c), in Abhängigkeit von Betriebsparametern der Küchenmaschine (10) und/oder Bedienungshandlungen eines Nutzers der Küchenmaschine (10) erfolgt.

13. Elektromotorisch betriebene Küchenmaschine (10), vorzugsweise mit einem Rührgefäß (24) und einem Rührwerk in dem Rührgefäß (24), aufweisend:
- mindestens eine nicht-flüchtige Datenspeichereinheit (50), wobei in der Datenspeichereinheit (50) zumindest ein persistentes Informationsobjekt (130) gespeichert ist,
- mindestens eine akustische Ausgabevorrichtung (40), insbesondere mit einem Lautsprecher (40),
wobei die akustische Ausgabevorrichtung (40) derart ausgeführt ist, dass zumindest ein vorgespeichertes Sprachsegment (120) in Abhängigkeit von einer digitalen Sprachvorlage (110) identifiziert wird,
das identifizierte Sprachsegment (120) abgerufen wird, und
das abgerufene Sprachsegment (120) akustisch ausgegeben wird, wobei mehrere Sprachsegmente (120) in dem Informationsobjekt (130) vorgespeichert sind, und
jeweils anhand zumindest einer Positionsinformation (140) im Informationsobjekt (130) identifiziert und/oder abgerufen werden, wobei
die Sprachsegmente (120) in Abhängigkeit von einem Rezept zeitlich nacheinander in einer definierten Reihenfolge ausgegeben werden, wobei die Sprachvorlage (110) zumindest ein Vorlagensegment (115) umfasst, welches zumindest eine Anweisung oder einen Hinweis für einen Nutzer der Küchenmaschine (10) umfasst,
wobei das Informationsobjekt (130) als einzelne Audiodatei (130) ausgestaltet ist, wobei die Positionsinformation (140) eine Zeitinformation (140) für die Sprachsegmente (120) der Audiodatei (130) ist,
wobei die Sprachsegmente (120) jeweils Audiodaten umfassen, welche dazu ausgeführt sind, über die Ausgabevorrichtung (40) ausgegeben zu werden, wobei die Reihenfolge durch das Rezept vorgegeben ist.

14. Küchenmaschine (10) nach Anspruch 13,
**dadurch gekennzeichnet,**
**dass** die Küchenmaschine (10) eine Schnittstelle (32) umfasst, wobei die Schnittstelle (32) derart ausgebildet ist, dass eine Datenkommunikation mit einer mobilen Datenspeichereinheit (60) durchführbar ist, um die digitale Sprachvorlage (110) von der mobilen Datenspeichereinheit (60) abzurufen.

15. Computerprogrammprodukt zur Erzeugung einer akustischen Sprachausgabe, bei einer elektromotorisch betriebenen Küchenmaschine mit einem Rührgefäß und einem Rührwerk in dem Rührgefäß, wobei das Computerprogrammprodukt dazu ausgeführt ist, zumindest die nachfolgenden Schritte durchzuführen:
a) Identifizieren von zumindest einem vorgespeicherten Sprachsegment (120) in Abhängigkeit von einer digitalen Sprachvorlage (110),
b) Abrufen des identifizierten Sprachsegmentes (120),
c) Akustisches Ausgeben des abgerufenen Sprachsegmentes (120),
wobei mehrere Sprachsegmente (120) in einem persistenten Informationsobjekt (130) vorgespeichert sind, und jeweils anhand zumindest einer Positionsinformation (140) im Informationsobjekt (130) identifiziert und/oder abgerufen werden, wobei die Sprachsegmente (120) in Abhängigkeit von einem Rezept zeitlich nacheinander in einer definierten Reihenfolge ausgegeben werden, wobei die Sprachvorlage (110) zumindest ein Vorlagensegment (115) umfasst, welches zumindest eine Anweisung oder einen Hinweis für einen Nutzer der Küchenmaschine (10) umfasst, wobei das Informationsobjekt (130) als einzelne Audiodatei (130) ausgestaltet ist, wobei die Positionsinformation (140) eine Zeitinformation (140) für die Sprachsegmente (120) der Audiodatei (130) ist,
wobei die Sprachsegmente (120) jeweils Audiodaten umfassen, welche dazu ausgeführt sind, über eine Ausgabevorrichtung (40) ausgegeben zu werden,
wobei die Reihenfolge durch das Rezept vorgegeben ist.

## Claims

1. Method (100) for generating an acoustic voice output, in an electric motor-driven food processor (10) with a stirring vessel (24) and a stirring device in the stirring vessel (24), **comprising the following steps**:
a) identification of at least one pre-stored voice segment (120) in dependence on a digital voice template (110),
(b) retrieving the identified voice segment (120),
(c) acoustic output of the retrieved voice segment (120),
wherein a plurality of voice segments (120) are pre-stored in a persistent information object (130), and are identified and/or retrieved in each case by means of at least one item of position information (140) in the information object (130), wherein the voice segments (120) are output successively in time in a defined sequence as a function of a recipe, wherein the voice template (110) comprises at least one template segment (115), which comprises at least one instruction or note for a user of the food processor (10), wherein the information object (130) is designed as a single audio file (130), wherein the position information (140) is a time information (140) for the voice segments (120) of the audio file (130),
wherein the voice segments (120) each comprise audio data adapted to be output via an output device (40), wherein the sequence is determined by the recipe.

2. Method (100) according to one of the preceding claims,
**characterized in that,**
for the identification according to step a) at least one template segment (115) of the voice template (110) is retrieved, and in particular the template segment (115) is assigned to the position information (140) in order to identify the at least one voice segment (120), wherein preferably for identification according to step a), a local identification is carried out by assigning the template segment (115) to the position information (140) of a local information object (133) in order to determine a local position information (143), wherein in particular the local information object (133) is stored in a non-volatile data storage unit (50) of the food processor (10).

3. Method (100) according to claim 2,
**characterized in that,**
according to step a) a remote identification and/or generation of the voice segment (120) is carried out using the template segment (115), in particular only if a local identification was unsuccessful, preferably according to step b) the remotely identified or remotely generated voice segment (125) being retrieved via network, a networked data transmission being carried out during the remote identification and/or generation, and/or the identification and/or generation being carried out not locally, but spatially separately, by a remote computing unit.

4. Method (100) according to claim 3,
**characterized in that,**
according to step a) a remote identification is carried out by assigning the template segment (115) to the position information (140) of a remote information object (135) in order to determine a remote position information (145), preferably only if a local identification was unsuccessful, wherein preferably according to step a) and/or b) a voice segment (120) of the remote information object (135) is identified and/or retrieved on the basis of the remote position information (145), and is transmitted in particular via network to the food processor (10).

5. Method (100) according to one of the preceding claims,
**characterized in that,**
the identification and/or assignment is carried out on the basis of local database entries (163) of a local database (153) and/or on the basis of remote database entries (165) of a remote database (155), the database entries (160) in particular linking first information to a template segment (115) with second information to the position information (140), the remote database (155) being evaluated and/or processed and/or stored by a remote computing unit.

6. Method (100) according to one of the preceding claims,
**characterized in that,**
the voice segment (120), in particular the remotely generated voice segment (125), comprises audio data generated by a text-to-voice system or recorded by natural voice.

7. Method (100) according to one of the preceding claims,
**characterized in that,**
the individual voice segments (120) and/or the respective audio data comprise at least sentences and/or words and/or phonemes and/or diphones and/or syllables and/or morphemes and/or phrases.

8. Method (100) according to one of the preceding claims,
**characterized in that,**
the voice template (110) comprises predetermined words and/or sentences, with acoustic words and/or sentences and/or sentence combinations synthesized as voice output in accordance with the voice template (110) being generated by the retrieval according to step b) and/or by recombining the voice segments (120), in particular according to step b).

9. Method (100) according to one of the preceding claims,
**characterized in that,**
the individual voice segments (120) and/or the respective audio data and/or the voice template (110), in particular the individual template segments (115), comprise exclusively predetermined sentences and/or words, the sentences and/or words being in particular recipe-related.

10. Method (100) according to one of the preceding claims,
**characterized in that,**
the voice template (110) is stored in one or more default files, in particular in and/or with and/or associated with a recipe for the food processor (10), preferably the recipe with the voice template (110) being stored in a mobile data storage unit (60).

11. Method (100) according to one of the preceding claims,
**characterized in that,**
the recipe comprises instructions for an operator of the food processor (10), which are output verbally as a function of an operating state of the food processor (10).

12. Method (100) according to one of the preceding claims,
**characterized in that,**
the generation of the voice output, in particular the temporal output of the voice segments (120) and/or the temporally repeated execution of steps a) to c), takes place as a function of operating parameters of the food processor (10) and/or operating actions of a user of the food processor (10).

13. Electric motor-driven food processor (10), preferably with a stirring vessel (24) and a stirring device in the stirring vessel (24), comprising
- at least one non-volatile data storage unit (50), wherein at least one persistent information object (130) is stored in the data storage unit (50),
- at least one acoustic output device (40), in particular with a loudspeaker (40)
wherein the acoustic output device (40) is designed such that at least one pre-stored voice segment (120) is identified in dependence on a digital voice template (110),
the identified voice segment (120) is retrieved, and
the retrieved voice segment (120) is output acoustically, wherein
a plurality of voice segments (120) are pre-stored in the information object (130) and are identified and/or retrieved in each case on the basis of at least one item of position information (140) in the information object (130), wherein the voice segments (120) are output successively in a defined sequence as a function of a recipe, wherein the voice template (110) comprises at least one template segment (115) which comprises at least one instruction or note for a user of the food processor (10),
wherein the information object (130) is configured as a single audio file (130), wherein the position information (140) is time information (140) for the voice segments (120) of the audio file (130),
wherein the voice segments (120) each comprise audio data which are designed to be output via the output device (40), the sequence being predetermined by the recipe.

14. Food processor (10) according to claim 13,
**characterized in that,**
the food processor (10) comprises an interface (32), the interface (32) being designed such that data communication with a mobile data storage unit (60) can be carried out in order to retrieve the digital voice template (110) from the mobile data storage unit (60).

15. Computer program product for generating an acoustic voice output, in the case of an electric motor-driven food processor with a stirring vessel and a stirring device in the stirring vessel,
wherein the computer program product is designed to perform at least the following steps:
a) identification of at least one pre-stored voice segment (120) in dependence on a digital voice template (110),
(b) retrieving the identified voice segment (120),
(c) acoustic output of the retrieved voice segment (120),
wherein a plurality of voice segments (120) are pre-stored in a persistent information object (130), and are identified and/or retrieved in each case by means of at least one item of position information (140) in the information object (130), wherein the voice segments (120) are output successively in time in a defined sequence as a function of a recipe, wherein the voice template (110) comprises at least one template segment (115), which comprises at least one instruction or note for a user of the food processor (10), wherein the information object (130) is designed as a single audio file (130), wherein the position information (140) is a time information (140) for the voice segments (120) of the audio file (130),
wherein the voice segments (120) each comprise audio data adapted to be output via an output device (40),
wherein the sequence is determined by the recipe.

## Revendications

1. Procédé (100) pour générer une sortie vocale acoustique, dans un robot ménager (10) à moteur électrique avec un récipient d'agitation (24) et un dispositif d'agitation dans le récipient d'agitation (24),
**avec les étapes suivantes** :
a) identification d'au moins un segment vocal pré-enregistré (120) en fonction d'un modèle vocal numérique (110),
(b) récupération du segment vocal identifié (120),
(c) sortie acoustique du segment vocal récupéré (120),
dans lequel une pluralité de segments vocaux (120) sont pré-enregistrés dans un objet d'information persistant (130), et sont identifiés et/ou récupérés à chaque fois au moyen d'au moins une information de position (140) dans l'objet d'information (130), dans lequel les segments vocaux (120) sont émis successivement dans le temps dans une séquence définie en fonction d'une recette, dans lequel le modèle vocal (110) comprend au moins un segment de modèle (115), qui comprend au moins une instruction ou une note pour un utilisateur du robot ménager (10), dans lequel l'objet d'information (130) est conçu comme un seul fichier audio (130), dans lequel l'information de position (140) est une information de temps (140) pour les segments vocaux (120) du fichier audio (130),
dans lequel les segments vocaux (120) comprennent chacun des données audio adaptées pour être émises via un dispositif de sortie (40), dans lequel la séquence est déterminée par la recette.

2. Procédé (100) selon l'une des revendications précédentes,
**caractérisé en ce que**
pour l'identification selon l'étape a), au moins un segment de modèle (115) du modèle vocal (110) est récupéré, et en particulier le segment de modèle (115) est associé à l'information de position (140) afin d'identifier le au moins un segment vocal (120), dans lequel de préférence pour l'identification selon l'étape a), une identification locale est effectuée en affectant le segment de modèle (115) à l'information de position (140) d'un objet d'information local (133) afin de déterminer une information de position locale (143), l'objet d'information local (133) étant notamment stocké dans une unité de stockage de données non volatile (50) du robot ménager (10).

3. Procédé (100) selon la revendication 2,
**caractérisé en ce que**
conformément à l'étape a), une identification et/ou une génération à distance du segment vocal (120) est effectuée à l'aide du segment de modèle (115), en particulier uniquement si une identification locale a échoué, de préférence conformément à l'étape b), le segment vocal (125) identifié ou généré à distance étant appelé en réseau, une transmission de données en réseau étant effectuée pendant l'identification et/ou la génération à distance, et/ou l'identification et/ou la génération étant effectuée non pas localement, mais spatialement séparément, par une unité de calcul à distance.

4. Procédé (100) selon la revendication 3,
**caractérisé en ce que**
selon l'étape a), une identification à distance est effectuée en affectant le segment de modèle (115) à l'information de position (140) d'un objet d'information à distance (135) afin de déterminer une information de position à distance (145), de préférence seulement si une identification locale a échoué, dans lequel de préférence selon l'étape a) et/ou b), un segment vocal (120) de l'objet d'information à distance (135) est identifié et/ou récupéré sur la base de l'information de position à distance (145), et est transmis en particulier en réseau au robot ménager (10).

5. Procédé (100) selon l'une des revendications précédentes,
**caractérisé en ce que**
l'identification et/ou l'affectation est effectuée sur la base d'entrées de base de données locales (163) d'une base de données locale (153) et/ou sur la base d'entrées de base de données distantes (165) d'une base de données distante (155), les entrées de base de données (160) reliant notamment une première information à un segment de modèle (115) avec une deuxième information à une information de position (140), la base de données distante (155) étant évaluée et/ou traitée et/ou stockée par une unité de calcul distante.

6. Procédé (100) selon l'une des revendications précédentes,
**caractérisé en ce que**
le segment vocal (120), en particulier le segment vocal généré à distance (125), comprend des données audio générées par un système de synthèse vocale ou enregistrées par la parole naturelle.

7. Procédé (100) selon l'une des revendications précédentes,
**caractérisé en ce que**
les différents segments vocaux (120) et/ou les données audio respectives comprennent au moins des phrases et/ou des mots et/ou des phonèmes et/ou des diphones et/ou des syllabes et/ou des morphèmes et/ou des phrases.

8. Procédé (100) selon l'une des revendications précédentes,
**caractérisé en ce que**
le modèle vocal (110) comprend des mots et/ou des phrases prédéterminés, des mots et/ou des phrases acoustiques et/ou des combinaisons de phrases synthétisés en tant que sortie vocale selon le modèle vocal (110) étant générés par le récupération selon l'étape b) et/ou par la recombinaison des segments vocaux (120), en particulier selon l'étape b).

9. Procédé (100) selon l'une des revendications précédentes,
**caractérisé en ce que**
les différents segments vocaux (120) et/ou les données audio correspondantes et/ou le modèle vocal (110), en particulier les différents segments de modèle (115), comprennent exclusivement des phrases et/ou des mots prédéterminés, les phrases et/ou les mots étant notamment liés à la recette.

10. Procédé (100) selon l'une des revendications précédentes,
**caractérisé en ce que**
le modèle vocal (110) est stocké dans un ou plusieurs fichiers par défaut, en particulier dans et/ou avec et/ou associé à une recette pour le robot ménager (10), de préférence la recette avec le modèle vocal (110) étant stockée dans une unité de stockage de données mobile (60).

11. Procédé (100) selon l'une des revendications précédentes,
**caractérisé en ce que**
la recette comprend des instructions pour un utilisateur du robot ménager (10), qui sont données verbalement en fonction d'un état de fonctionnement du robot ménager (10).

12. Procédé (100) selon l'une des revendications précédentes,
**caractérisé en ce que**
la génération de la sortie vocale, en particulier la sortie temporelle des segments vocaux (120) et/ou l'exécution temporellement répétée des étapes a) à c), a lieu en fonction des paramètres de fonctionnement du robot ménager (10) et/ou des actions de fonctionnement d'un utilisateur du robot ménager (10).

13. Robot ménager (10) à moteur électrique, de préférence avec un récipient d'agitation (24) et un dispositif d'agitation dans le récipient d'agitation (24), comprenant
- au moins une unité de stockage de données non volatiles (50), dans laquelle au moins un objet d'information persistant (130) est stocké dans l'unité de stockage de données (50),
- au moins un dispositif de sortie acoustique (40), en particulier avec un haut-parleur (40)
dans lequel le dispositif de sortie acoustique (40) est conçu de telle sorte qu'au moins un segment vocal pré-enregistré (120) est identifié en fonction d'un modèle vocal numérique (110),
le segment vocal identifié (120) est récupéré, et
le segment vocal (120) récupéré est émis acoustiquement, plusieurs segments vocaux (120) étant
pré-enregistrés dans l'objet d'information (130) et étant identifiés et/ou récupérés respectivement sur la base d'au moins une information de position (140) dans l'objet d'information (130), les segments vocaux (120) étant émis successivement dans une séquence défini en fonction d'une recette, le modèle vocal (110) comprenant au moins un segment de modèle (115) qui comprend au moins une instruction ou une note pour un utilisateur du robot ménager (10),
dans lequel l'objet d'information (130) est configuré comme un seul fichier audio (130), dans lequel l'information de position (140) est une information de temps (140) pour les segments vocaux (120) du fichier audio (130),
dans lequel les segments vocaux (120) comprennent chacun des données audio qui sont conçues pour être émises par le dispositif de sortie (40), la séquence étant prédéterminée par la recette.

14. Robot ménager (10) selon la revendication 13,
**caractérisé en ce que**
le robot ménager (10) comprend une interface (32), l'interface (32) étant conçue de telle sorte que la communication de données avec une unité mobile de stockage de données (60) puisse être effectuée afin de récupérer le modèle vocal numérique (110) de l'unité mobile de stockage de données (60).

15. Programme d'ordinateur permettant de générer une sortie vocale acoustique, dans le cas d'un robot ménager à moteur électrique avec un récipient d'agitation et un dispositif d'agitation dans le récipient d'agitation,
où le programme d'ordinateur est conçu pour exécuter au moins les étapes suivantes :
a) identification d'au moins un segment vocal pré-enregistré (120) en fonction d'un modèle vocal numérique (110),
(b) récupération du segment vocal identifié (120),
(c) sortie acoustique du segment vocal récupéré (120),
dans lequel une pluralité de segments vocaux (120) sont pré-enregistrés dans un objet d'information persistant (130), et sont identifiés et/ou récupérés à chaque fois au moyen d'au moins une information de position (140) dans l'objet d'information (130), dans lequel les segments vocaux (120) sont émis successivement dans le temps dans une séquence définie en fonction d'une recette, dans lequel le modèle vocal (110) comprend au moins un segment de modèle (115), qui comprend au moins une instruction ou une note pour un utilisateur du robot ménager (10), dans lequel l'objet d'information (130) est conçu comme un seul fichier audio (130), dans lequel l'information de position (140) est une information de temps (140) pour les segments vocaux (120) du fichier audio (130),
dans lequel les segments vocaux (120) comprennent chacun des données audio adaptées pour être émises par un dispositif de sortie (40), où la séquence est déterminée par la recette.
